# FASCICULE DE BREVET EUROPEEN

(11) **EP 1 704 706 B1**
(45) Date de publication et mention de la délivrance du brevet: **04.06.2008**
(21) Numéro de dépôt: 05717357.7
(22) Date de dépôt: 04.01.2005
(51) Int. Cl.: H04M 1/60

(54) **INTERFACE VOCALE DE RECHERCHE ET SELECTION D'UNE RUBRIQUE, NOTAMMENT POUR UN TELEPHONE MOBILE EMBARQUE DANS UN VEHICULE**
SPRACHSCHNITTSTELLE ZUM FINDEN UND AUSWÄHLEN EINES POSTENS, DER ZUM BEISPIEL FÜR EIN MOBILTELEFON BESTIMMT IST, DAS SICH AN BORD EINES FAHRZEUGS BEFINDET
SPEECH INTERFACE FOR FINDING AND SELECTING AN ITEM, WHICH IS INTENDED, FOR EXAMPLE, FOR A MOBILE TELEPHONE THAT IS ON BOARD A VEHICLE

(30) Priorité: 14.01.2004 FR 0400299
(43) Date de publication de la demande: 27.09.2006
(73) Titulaire: PARROT (Société Anonyme), 75010 Paris (FR)
(72) Inventeur: SEYDOUX, Henri, F-75017 Paris (FR)
(74) Mandataire: Dupuis-Latour, Dominique
(86) Numéro de dépôt international: PCT/FR2005/000006
(87) Numéro de publication internationale: WO 2005/074239

(56) Documents cités:
- EP-A- 0 723 378
- US-A- 6 029 072
- US-A1- 2002 197 954
- US-A1- 2003 114 202

## Description

L'invention concerne un dispositif d'aide à la composition des numéros téléphoniques et, de façon plus générale, l'aide à la navigation dans les menus hiérarchisés de commande d'appareils tels que les téléphones portables.

La composition des numéros de téléphone est habituellement réalisée à partir d'un clavier et d'un afficheur, ou d'un dispositif de sélection (tel que des touches de défilement ou une molette) dont la manipulation permet à l'utilisateur de faire son choix dans la liste qui lui est présentée sur l'afficheur (liste de noms, de numéros de téléphone ou bien d'articles de menu).

Il est cependant des cas où l'utilisation de l'afficheur n'est pas souhaitable, ou pas possible, tout particulièrement avec les téléphones embarqués dans des véhicules automobiles, qu'il s'agisse d'un téléphone intégré au véhicule ou bien d'un téléphone portable utilisé à l'intérieur du véhicule en combinaison avec un adaptateur de type "*car kit"*, c'est-à-dire un adaptateur de voiture pour radiotéléphone permettant notamment d'assurer un fonctionnement "mains libres" de ce dernier.

Dans ces situations, lorsque l'utilisateur est le conducteur, il faut éviter de détourner son attention et son regard en l'obligeant à observer l'afficheur. De plus, l'afficheur étant généralement de petite dimension, celui-ci est difficilement lisible, à moins que l'utilisateur ne rapproche son téléphone (dans le cas d'un dispositif autonome) ou ne se rapproche de l'afficheur (lorsque celui-ci est intégré au tableau de bord) ; mais dans tous les cas, il s'agit de manoeuvres dangereuses, à proscrire.

Une solution consiste à prévoir un système à reconnaissance vocale, comme celui qui est décrit par exemple dans le WO-A-98/45997 (Parrot) : lorsque le radiotéléphone est posé sur un berceau, un adaptateur intégré au véhicule prend le relais de la gestion des fonctions du téléphone, qui peuvent alors être pilotées par des commandes vocales et/ou un appui fugitif (simple ou double clic) sur un unique bouton de commande. Les fonctions telles que décrochage, recherche du numéro d'un correspondant, composition de ce numéro, etc. peuvent ainsi être gérées de façon simple et efficace.

D'autres systèmes téléphoniques à commande vocale sont décrits par les US-A-6 029 072, US-A-2003/114202 et US-A-2002/197954.

Du fait de la mise en oeuvre d'une reconnaissance vocale, ces dispositifs requièrent cependant un apprentissage préalable, ne serait-ce que pour enregistrer l'empreinte vocale associée à chaque nom de correspondant ou à chaque commande. Ces dispositifs nécessitent donc un enregistrement préalable de tous les noms de correspondants ou de commande, et ce pour chacune des personnes susceptibles d'utiliser l'appareil. En effet, il existe autant d'empreintes vocales que de locuteurs différents, et l'utilisation de ces appareils est donc limitée à un nombre réduit d'individus.

L'un des buts de l'invention est de proposer un dispositif de sélection pour téléphone où, comme dans le dispositif précédent, l'utilisateur n'ait pas besoin de regarder un afficheur, mais qui puisse être mis en oeuvre sans recourir au système de reconnaissance vocale et/ou dans des circonstances particulières telles que : utilisation par une personne différente de celle ayant effectué l'apprentissage ; ou utilisation par la personne ayant effectué l'apprentissage, pour composer en toute sécurité le numéro d'un correspondant dont il aurait oublié l'empreinte ; ou encore exploitation des empreintes vocales dans des situations ou il est impossible d'utiliser le système de reconnaissance vocale - par exemple en présence de bruits de voix de niveau important émis par les jeunes passagers situés à l'arrière du véhicule.

Le dispositif de l'invention comprend, de manière en elle-même connue, une mémoire de données contenant une pluralité de rubriques ordonnées en une liste séquentielle, un pointeur de sélection de l'une des rubriques de la liste, des moyens sélecteurs aptes à incrémenter ou décrémenter le pointeur en réponse à une manipulation contrôlée par l'utilisateur, et des moyens processeurs, aptes à exécuter un ensemble d'actions prédéterminées fonction des rubriques de la mémoire de données.

De façon caractéristique de l'invention, ce dispositif comprend en outre des moyens acoustiques aptes à générer à l'adresse de l'utilisateur un message audible de représentation vocalisée de la rubrique sélectionnée par le pointeur en réponse à une incrémentation ou une décrémentation de ce pointeur, et des moyens de confirmation manipulables par l'utilisateur, aptes à lire la rubrique sélectionnée par le pointeur et à transférer cette rubrique aux moyens processeurs pour exécution de l'action correspondante. Les moyens sélecteurs comprennent un bouton rotatif bidirectionnel manipulable par l'utilisateur, et les moyens de confirmation comprennent un contact fugitif actionnable par appui sur ce bouton rotatif.

Le dispositif peut comprendre en outre des moyens afficheurs de la rubrique sélectionnée par le pointeur, qui de préférence affichent également au moins l'une des rubriques précédente et/ou suivante de la liste.

Ces rubriques peuvent contenir :
- des noms, avec un numéro téléphonique associé à chaque rubrique ; l'action exécutée par les moyens processeurs est alors la composition du numéro téléphonique correspondant.
- les lettres de l'alphabet ; l'action exécutée par les moyens processeurs est alors le positionnement du pointeur su le premier nom commençant par la lettre sélectionnée.
- des titres de menus de commandes, ou des titres de menus de niveau inférieur ; l'action exécutée par les moyens processeurs est alors l'exécution de la commande correspondante, ou la sélection du menu correspondant de niveau inférieur.

On va maintenant décrire un exemple de réalisation du dispositif de l'invention, en référence aux dessins annexés.
La figure 1 est une vue générale extérieure du dispositif de l'invention.
La figure 2 est un synoptique de ce dispositif ainsi que du téléphone auquel il est interfacé, avec des exemples d'affichages susceptibles d'être reproduits sur l'écran.
La figure 3 est un organigramme général explicitant la manière dont est utilisé ce dispositif.

Comme on l'a indiqué plus haut, l'application privilégiée de l'invention est celle des radiotéléphones utilisés à bord des véhicules, notamment les "*car kits*", c'est-à-dire les adaptateurs de voiture permettant notamment d'assurer un fonctionnement "mains libres" du radiotéléphone. Cette application n'est cependant pas limitative, et l'invention peut s'appliquer utilement à de nombreux autres équipements ou circuits installés dans le véhicule ou incorporés dans celui-ci à demeure tels qu'autoradio, calculateur de bord, équipement d'aide à la navigation, etc.

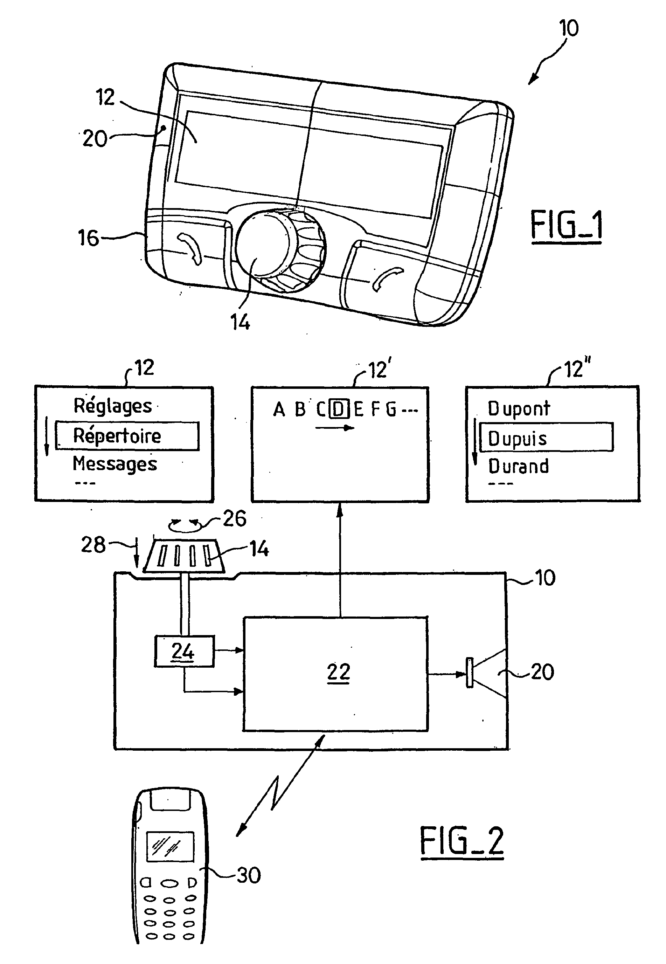

Dans l'exemple illustré, le dispositif de l'invention se présente sous la forme illustrée figure 1.

Un boîtier 10, éventuellement intégré au tableau de bord du véhicule, est pourvu d'un afficheur 12, d'un bouton moleté 14 et de deux touches 16, 18 semblables aux touches verte et rouge habituellement rencontrées sur un téléphone portable (vert = décrochage/composition; rouge = raccrochage/annulation). Le boîtier 10 comporte également un transducteur 20 tel qu'un haut-parleur ou analogue pour la restitution de messages audibles à l'adresse de l'utilisateur.

Comme illustré sur le synoptique de la figure 2, le dispositif 10 incorpore un circuit 22 recevant en entrée, par l'intermédiaire d'un contacteur 24, des informations sur la manoeuvre du bouton 14. Ce bouton peut être manipulé d'une part en le faisant tourner autour de son axe dans un sens ou dans l'autre (flèches 26), d'autre part en le soumettant à un appui axial fugitif ou "clic" (flèche 28).

Le dispositif 10 est interfacé à un téléphone mobile 30. La liaison entre le dispositif 10 et le téléphone 30 peut être réalisée de diverses manières connues. Il peut s'agir d'un système avec un berceau recevant le téléphone et relié à un boîtier universel intégré au véhicule, comme cela est décrit dans le EP-A-1 363 443 (Parrot). En variante, et de manière avantageuse, le téléphone 30 est relié au circuit 22 du dispositif 10 par une liaison sans fil telle qu'une liaison de type *Bluetooth*^{®}. Les spécifications *Bluetooth*^{®} prévoient en effet la possibilité de piloter à distance toutes les fonctions d'un téléphone portable par une liaison sans fil bidirectionnelle, fonctions telles que décrochage, raccrochage, numérotation, navigation dans les menus, navigation dans les répertoires, etc. en prenant intégralement, à distance, le contrôle du téléphone portable et en se substituant entièrement au clavier de celui-ci.

Les commandes à la disposition de l'utilisateur sont donc réduites au bouton moleté 14 (rotation et appui) et aux deux touches 16 et 18. On notera que l'afficheur 12 décrit dans cet exemple n'a qu'un rôle subsidiaire et n'intervient pas dans la mise en oeuvre de l'invention qui, essentiellement, n'utilise que des moyens acoustiques en combinaison avec les boutons de commande 14, 16 et 18. L'afficheur 12 ne sert en fait que pour un rappel visuel des messages acoustiques, ou bien si l'utilisateur veut utiliser l'appareil sans tenir compte de ces messages acoustiques, par exemple pour aller plus vite et s'il n'est pas dangereux pour lui de détourner son regard pour observer l'écran.

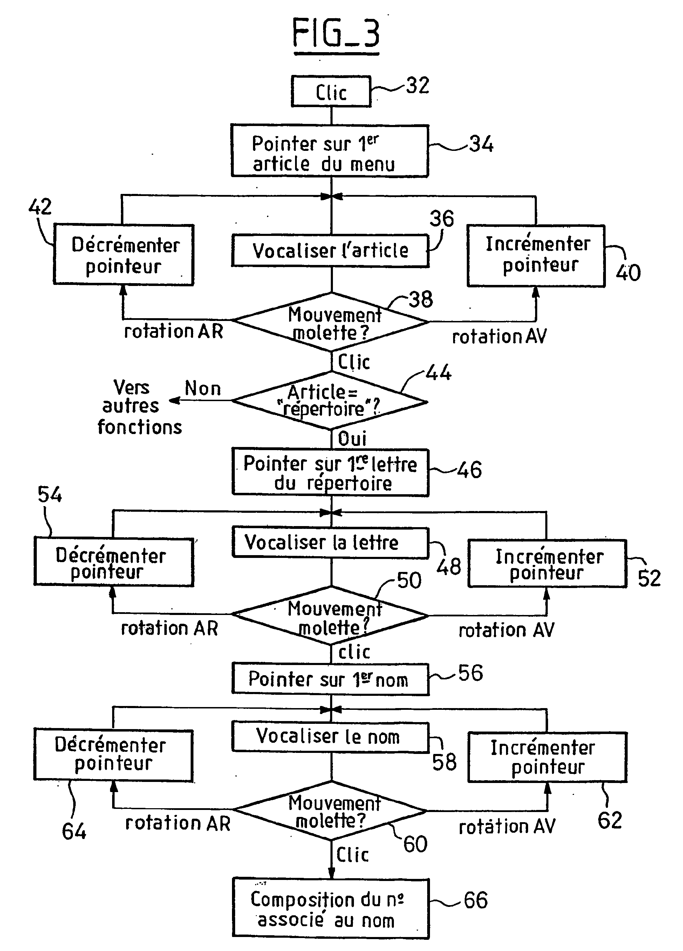

On va maintenant décrire la manière d'utiliser ce dispositif, en référence à l'organigramme de la figure 3.

On ne décrira pas l'usage des touches 16 et 18, qui sont les mêmes que les touches verte et rouge d'un téléphone portable classique, servant à commander le décrochage ou le raccrochage et qui ne sont pas, en elles-mêmes, nécessaires à la mise en oeuvre de l'invention.

Pour activer le dispositif, l'utilisateur "clique", c'est-à-dire appuie de manière fugitive sur le bouton 14 (étape 32), ce qui a pour effet de commander un pointeur qui sélectionne un premier article d'un menu (étape 34), par exemple un menu de choix d'une fonction du téléphone parmi plusieurs, telles que "composition"/"répertoire"/"réglages"/"messages", etc.

L'article correspondant du menu, par exemple "répertoire" est alors vocalisé par un dispositif de synthèse vocale sous forme d'un message acoustique reproduit par le transducteur 20 (étape 36). Le message acoustique peut être soit un message préenregistré, chargé dans le dispositif lors de la configuration de celui-ci, soit un message synthétisé par l'intermédiaire d'un logiciel de phonétisation à partir du texte de l'article de menu - c'est-à-dire-que le mot "répertoire" est considéré comme une chaîne de caractères alphabétiques qui sera lue, décomposée en une suite de syllabes puis phonétisée par un logiciel de synthèse vocale approprié. Le message acoustique peut également être une empreinte vocale enregistrée par le système de reconnaissance vocale.

Le dispositif attend ensuite un actionnement du bouton 14 (étape 38).

En cas de rotation de ce bouton dans un sens ou dans l'autre, le pointeur est incrémenté ou décrémenté (étapes 40, 42) de manière à sélectionner, selon le cas, l'article précédent ou l'article suivant du même menu. Le nouvel article pointé est à nouveau vocalisé (étape 36), jusqu'à détection d'un nouveau mouvement du bouton 14 (étape 38), et ainsi de suite.

Comme illustré en 12, à gauche sur la figure 2, l'afficheur présente la liste des différents articles, ou tout au moins une partie de cette liste, en mettant en évidence celui des articles désigné par le pointeur, par exemple en encadrant cet article.

Si l'utilisateur a sélectionné l'article "répertoire" dans le menu en appuyant sur le bouton 14 (étape 44), le dispositif va alors être mis en mesure de sélectionner un nom dans ce répertoire, d'abord alphabétiquement par la première lettre du nom, puis ensuite parmi tous les noms commençant par une même lettre.

Le dispositif commence par pointer sur la première lettre de l'alphabet ou, à tout le moins, sur la première lettre pour laquelle il existe un nom dans le répertoire (étape 46). Cette lettre est vocalisée (étape 48) de manière à la rendre audible par l'utilisateur.

Celui-ci va ensuite tourner le bouton 14, dans un sens ou dans l'autre, pour passer à la lettre suivante ou précédente (étapes 52, 54) dans l'alphabet, lettre qui sera, ici encore, vocalisée après avoir été sélectionnée (étape 48) et ainsi de suite. L'utilisateur peut ainsi parcourir très rapidement l'alphabet en tournant le bouton 14 jusqu'à entendre la première lettre du nom qu'il souhaite sélectionner, par exemple "D".

Pendant cette phase de sélection de la lettre, comme illustré en 12' au centre sur la figure 2, l'afficheur présente tout ou partie de l'alphabet, la lettre sélectionnée étant mise en évidence par un cadre.

Lorsqu'il a trouvé la lettre voulue, l'utilisateur appuie sur le bouton 14, ce qui a pour effet de commander la sélection par le pointeur du premier nom de la liste de tous les noms commençant par cette lettre (étape 56). Ce nom est alors vocalisé (étape 58) de manière à le rendre audible. L'utilisateur va ensuite tourner le bouton 14, dans un sens ou dans l'autre, pour passer au nom suivant ou précédent (étapes 62, 64) dans la liste, nom qui sera, ici encore, vocalisé après avoir été sélectionné (étape 58) et ainsi de suite. L'utilisateur peut ainsi parcourir très rapidement la liste en tournant le bouton 14 jusqu'à entendre le nom qu'il souhaite sélectionner.

Pendant cette phase de sélection du nom, comme illustré en 12" à droite sur la figure 2, l'afficheur présente tout ou partie de la liste, le nom sélectionné étant mis en évidence par un cadre.

Une fois le nom choisi, la composition du numéro associé à ce nom sera déclenchée par un appui final sur le bouton 14 (étape 66) ou par le bouton vert 18 de composition/décrochage.

Comme on le comprendra, de nombreuses variantes de mise en oeuvre peuvent être envisagées.

Ainsi, dans le cas d'une liste de noms peu étendue, il peut être plus simple d'omettre l'étape de sélection alphabétique (étapes 46 à 54), la rotation du bouton 14 commandant directement l'exploration de la liste de noms dès que la fonction "répertoire" a été sélectionnée.

De la même façon, en cours de communication, la rotation du bouton 14 peut être affectée à une autre fonction, par exemple le réglage du volume sonore en cours de conversation.

## Revendications

1. Un dispositif (10) formant interface pour la recherche et la sélection d'une rubrique dans un répertoire hiérarchisé, notamment pour la recherche et la sélection d'un numéro dans un répertoire d'un téléphone mobile (30) embarqué dans un véhicule, comprenant :
- une mémoire de données (22), contenant une pluralité desdites rubriques ordonnées en une liste séquentielle,
- un pointeur de sélection de l'une des rubriques de la liste,
- des moyens sélecteurs (24), aptes à incrémenter ou décrémenter le pointeur en réponse à une manipulation contrôlée par l'utilisateur, et
- des moyens processeurs, aptes à exécuter un ensemble d'actions prédéterminées fonction des rubriques de la mémoire de données,
**caractérisé en ce qu'**il comprend en outre :
- des moyens acoustiques (20), aptes à générer à l'adresse de l'utilisateur un message audible de représentation vocalisée de la rubrique sélectionnée par le pointeur en réponse à une incrémentation ou une décrémentation de ce pointeur, et
- des moyens de confirmation (24) manipulables par l'utilisateur, aptes à lire la rubrique sélectionnée par le pointeur et à transférer cette rubrique aux moyens processeurs pour exécution de l'action correspondante,
et **en ce que** lesdits moyens sélecteurs comprennent un bouton rotatif bidirectionnel (14) manipulable (26) par l'utilisateur, lesdits moyens de confirmation comprenant un contact fugitif actionnable par appui (28) sur ce bouton rotatif.

2. Le dispositif de la revendication 1, comprenant en outre des moyens afficheurs (12) de la rubrique sélectionnée par le pointeur.

3. Le dispositif de la revendication 2, dans lequel les moyens afficheurs (12) affichent également au moins l'une des rubriques précédente et/ou suivante de la liste.

4. Le dispositif de la revendication 1, dans lequel :
- lesdites rubriques contiennent des noms,
- un numéro téléphonique est associé à chaque rubrique, et
- l'action exécutée par les moyens processeurs est la composition du numéro téléphonique correspondant.

5. Le dispositif de la revendication 4, dans lequel :
- lesdites rubriques contiennent les lettres de l'alphabet, et
- l'action exécutée par les moyens processeurs est le positionnement du pointeur su le premier nom commençant par la lettre sélectionnée.

6. Le dispositif de la revendication 1, dans lequel:
- lesdites rubriques contiennent des titres de menus de commandes, ou des titres de menus de niveau inférieur, et
- l'action exécutée par les moyens processeurs est l'exécution de la commande correspondante, ou la sélection du menu correspondant de niveau inférieur.

## Claims

1. A device (10) forming an interface for finding and selecting an item in a hierarchical directory, in particular for searching for and selecting a number in a directory of a mobile telephone (30) on board a vehicle, the device comprising:
- a data memory (22) containing a plurality of said items ordered as a sequential list;
- a pointer for selecting one of the items of the list;
- selector means (24) suitable for incrementing or decrementing the pointer in response to controlled manipulation by the user; and
- processor means suitable for executing a set of predetermined actions as a function of the items in the data memory;
**characterized by** further comprising:
- acoustic means (20) suitable for sending to the user an audible message constituting a voiced representation of the item selected by the pointer in response to said pointer being incremented or decremented; and
- confirmation means (24) that can be manipulated by the user, suitable for reading the item selected by the pointer and transferring said item to the processor means for executing the corresponding action;
and in that said selector means comprise a two-directional rotary knob (14) that can be manipulated (26) by the user, said confirmation means comprising a transient contact that can be actuated by pressing (28) on said rotary knob.

2. The device of claim 1, further comprising display means (12) for displaying the item selected by the pointer.

3. The device of claim 2, in which the display means (12) also display at least one of the preceding and/or following items in the list.

4. The device of claim 1, in which:
- said items contain names;
- a telephone number is associated with each item; and
- the action executed by the processor means is dialling the corresponding telephone number.

5. The device of claim 4, in which:
- said items contain letters of the alphabet; and
- the action executed by the processor means is positioning the pointer on the first name beginning by the selected letter.

6. The device of claim 1, in which:
- said items contain command menu titles, or the titles of lower-level menus; and
- the action executed by the processor means is to execute the corresponding command or to select the corresponding lower-level menu.

## Patentansprüche

1. Eine Vorrichtung (10), welche eine Schnittstelle zum Suchen und Auswählen einer Rubrik in einem hierarchisierten Verzeichnis bildet, insbesondere zum Suchen und Auswählen einer Nummer in einem Verzeichnis eines Mobiltelefons (30), welches in einem Fahrzeug eingebaut ist, umfassend:
- einen Datenspeicher (22), welcher eine Vielzahl angeordneter Rubriken und eine sequenzielle Liste umfasst,
- einen Auswahlcursor für eine der Rubriken der Liste
- Auswahlmittel (24), dazu geeignet, um den Cursor als Reaktion auf eine durch den Benutzer gesteuerte Bedienung herauf oder herabzuschieben, und
- Prozessormittel, dazu geeignet, um eine Gesamtheit von vorbestimmten Handlungen als Funktion der Rubriken des Datenspeichers auszuführen,
- **dadurch gekennzeichnet, dass** sie außerdem umfasst:
- akustische Mittel (20), dazu geeignet, um eine hörbare Mitteilung in stimmlicher Darstellung der durch den Cursor gewählten Rubrik als Reaktion auf eine Herauf- oder Herabschiebung dieses Cursors zur Beachtung des Benutzers zu erzeugen, und
- Bestätigungsmittel (24), welche durch den Benutzer bedienbar sind, dazu geeignet, um die durch den Cursor gewählte Rubrik zu lesen, und diese Rubrik mittels Prozessoren durch Ausführungen des entsprechenden Vorgangs zu übertragen,
und **dadurch, dass** die Auswahlmittel einen in zwei Richtungen drehenden Knopf (14) umfassen, welcher durch den Benutzer bedienbar (26) ist, wobei die Bestätigungsmittel einen Wischkontakt umfassen, welcher durch Druck (28) auf den Drehknopf bedienbar ist.

2. Vorrichtung nach Anspruch 1, außerdem Anzeigemittel (12) der durch den Cursor gewählten Rubrik umfassend.

3. Vorrichtung nach Anspruch 2, in welcher die Anzeigemittel (12) auch zumindest eine der vorhergehenden und/oder folgenden Rubriken der Liste anzeigen.

4. Vorrichtung nach Anspruch 1, in welcher:
- die Rubriken Namen enthalten,
- eine Telefonnummer jeder Rubrik zugeordnet ist, und
- der Vorgang, welcher von den Prozessormitteln ausgeführt wird, die Zusammenstellung der entsprechenden Telefonnummer ist.

5. Vorrichtung nach Anspruch 4, in welcher:
- die Rubriken die Alphabetbuchstaben enthalten, und
- der von den Prozessormitteln ausgeführte Vorgang die Positionierung des Zeigers auf dem ersten Namen ist, welcher durch den gewählten Buchstaben anfängt.

6. Vorrichtung nach Anspruch 1, in welcher:
- die Rubriken Menütitel der Befehle oder Menütitel des niedrigeren Niveaus umfassen, und
- der Vorgang, welcher durch die Prozessormittel ausgeführt wird, das Ausführen des entsprechenden Befehls oder das Auswählen des entsprechenden Menüs des niedrigeren Niveaus ist.
